# EUROPÄISCHE PATENTANMELDUNG

(11) **EP 2 172 762 A2**
(43) Veröffentlichungstag der Anmeldung: **07.04.2010**
(21) Anmeldenummer: 09171669.6
(22) Anmeldetag: 29.09.2009
(51) Int. Cl.: G01N 1/22

(54) **Vorrichtung zur Verdünnung eines zu analysierenden Gases mit einem Verdünnungsgas**

(30) Priorität: 02.10.2008 AT 5542008 U
(71) Anmelder: AVL List GmbH, 8020 Graz (AT)
(72) Erfinder: Arndt, Michael, 8010, Graz (AT); Bergmann, Alexander, 8052, Graz (AT); Knopf, Franz, 8051, Graz (AT); Schindler, Wolfgang, 8043, Graz (AT)
(74) Vertreter: Laminger, Norbert

(57) **Zusammenfassung**

Eine Vorrichtung zur Verdünnung eines zu analysierenden Gases mit einem Verdünnungsgas weist ein Probegasrohr (1) und eine Zuführung (3) für das Verdünnungsgas auf, die in eine gemeinsame Leitung (6) für das verdünnte, zu analysierende Gas münden.

Damit selbst bei großen Druckpulsationen im zu analysierenden Gas keine Rückströmung in die Leitung des zu analysierenden Gases und keine unkontrollierte Temperaturänderung dieses Gases erfolgen kann, geht die Zuführung (3) für das Verdünnungsgas in Form einer Venturidüse (7) in die gemeinsame Leitung (6) über, ist das Probegasrohr (1) gegenüber der Umgebungs- und Verdünnungsluft thermisch isoliert ausgeführt und mündet kurz vor der Stelle mit geringstem Querschnitt in die Venturidüse (7) ein.

## Beschreibung

Die Erfindung betrifft eine Vorrichtung zur Verdünnung eines zu analysierenden Gases mit einem Verdünnungsgas, mit einem Probegasrohr und einer Zuführung für das Verdünnungsgas, die in eine gemeinsame Leitung für das verdünnte, zu analysierende Gas münden.

In vielen Anwendungen wird bei der Probenahme eines zu analysierenden Gases, insbesondere zur Analyse von Partikeln im Gas, eine Verdünnung des zu analysierenden Gases vorgenommen. Beispielsweise wird bei der Abgasanalyse von Verbrennungskraftmaschinen eine Verdünnungsvorrichtung eingesetzt, um das heiße Abgas mit Luft zu verdünnen.

Dabei wird das zu analysierende Gas über eine Rohrleitung der Analyseeinrichtung zugeführt, in welche Rohrleitung auch eine Zuführung für das Verdünnungsgas, beispielsweise Luft, einmündet. Im weiteren Verlauf der Leitung wird dann das in einem bestimmten Verhältnis verdünnte, zu analysierende Gas geführt.

In der EP 1 890 125 A1 ist eine Vorrichtung geoffenbart, bei der die Leitungen für das zu analysierende Gas und jene für das Verdünnungsgas bis hin zum Abschnitt, in welchem die beiden Gase zusammengemischt werden, voneinander beabstandet geführt werden. Damit soll eine unkontrollierte Erwärmung des Verdünnungsgases vermieden werden, die zu nicht definierbaren Temperaturverhältnissen an und nach der Mischungsstelle führt.

Wesentlich kritischer ist jedoch die Temperatur des Abgases, die bis zur Mischungsstelle möglichst wenig abnehmen soll, um die dem Fachmann bekannte Partikelablagerung durch "Thermophorese" zu minimieren. Weiters sind Vorkehrungen zu treffen, um selbst bei hohen Druckpulsationen einen Rückfluss der Verdünnungsluft in die Leitung für das zu analysierende Gas bzw. eine unkontrollierte Vermischung mit dem Verdünnungsgas zu verhindern.

Die Aufgabe der vorliegenden Erfindung war es daher, eine Vorrichtung wie eingangs angegeben derart zu verbessern, dass selbst bei großen Druckpulsationen im zu analysierenden Gas keine Rückströmung in die Leitung des zu analysierenden Gases und keine unkontrollierte Temperaturänderung dieses Gases erfolgen kann.

Zur Lösung dieser Aufgabe ist die Vorrichtung **dadurch gekennzeichnet, dass** die Zuführung für das Verdünnungsgas in Form einer Venturidüse in die gemeinsame Leitung übergeht, dass das Probegasrohr gegenüber der Umgebungs- und Verdünnungsluft thermisch isoliert ausgeführt ist und kurz vor der Stelle mit geringstem Querschnitt in die Venturidüse einmündet. Über die Venturidüse kann der Verdünnungsluft ein Impuls aufgeprägt werden, der selbst bei pulsierendem Analysegas die Rückströmung des Verdünnungsgases in die Leitung für das zu analysierende Gas verhindert. Mit dem thermisch isolierten Probegasrohr kann neben der Aufrechterhaltung kontrollierter Mischungsverhältnisse auch die Abkühlung des zu analysierenden Gases und damit die thermophoretische Ablagerung von Partikeln in der Leitung für das Analysegas verhindert werden.

Die Verhinderung der unerwünschten Temperaturveränderung des zu analysierenden Gases, vorzugsweise eine Verhinderung der Abkühlung, wird gemäß einer vorteilhaften Ausführungsform der Erfindung dadurch unterstützt, dass das Probegasrohr von einem koaxialen Aussenrohr umgeben ist, und im Raum zwischen Probegas- und Aussenrohr ein Gas mit im wesentlichen der Temperatur des zu analysierenden Gases vorhanden ist.

Eine besonders einfache Lösung dafür sieht vor, dass Ein- und Austrittspassagen für das zu analysierende Gas in den Raum zwischen Probegas- und Aussenrohr vorhanden sind. Damit ist es ohne großen zusätzlichen Aufwand möglich, die Temperatur um die Leitung des zu analysierenden Gases auf dessen Niveau zu halten.

Vorteilhafterweise ist eine weitere Ausführungsform der Erfindung **dadurch gekennzeichnet, dass** das Endstück des Probegasrohres koaxial zur Venturidüse ausgerichtet ist.

Um die Effekt der Venturidüse zu verstärken, ist vorzugsweise vorgesehen, dass das Endstück des Probegasrohres geometrisch ähnlich der Venturidüse ausgebildet ist.

Eine weitere vorteilhafte Ausführungsform der erfindungsgemäßen Vorrichtung ist **dadurch gekennzeichnet, dass** die Zuführung für das Verdünnungsgas einen senkrecht zum Probegasrohr verlaufenden Abschnitt umfasst, der in eine dieses Probegasrohr ringförmig umgebende Kammer mündet, deren Ausgang in Form einer Venturidüse in die gemeinsame Leitung übergeht.

Dabei kann vorgesehen sein, dass die Achse des senkrecht zum Probegasrohr verlaufenden Abschnitts die Achse des Probegasrohres nicht schneidet.

Vorzugsweise ist auch vorgesehen, dass das Endstück des Probegasrohres einen sich zur Mündung verjüngenden Innenquerschnitt aufweist.

Bei der beschriebenen Anordnung wird im allgemeinen auch eine minimale Erwärmung des Verdünnungsgases stattfinden. Dies ist jedoch keine wesentliche physikalischtechnische Eigenschaft des Systems und kein kennzeichnendes Merkmal der Erfindung.

In der nachfolgenden Beschreibung soll die Erfindung anhand eines bevorzugten Ausführungsbeispieles und unter Bezugnahme auf die beigefügten Zeichnungen näher erläutert werden.

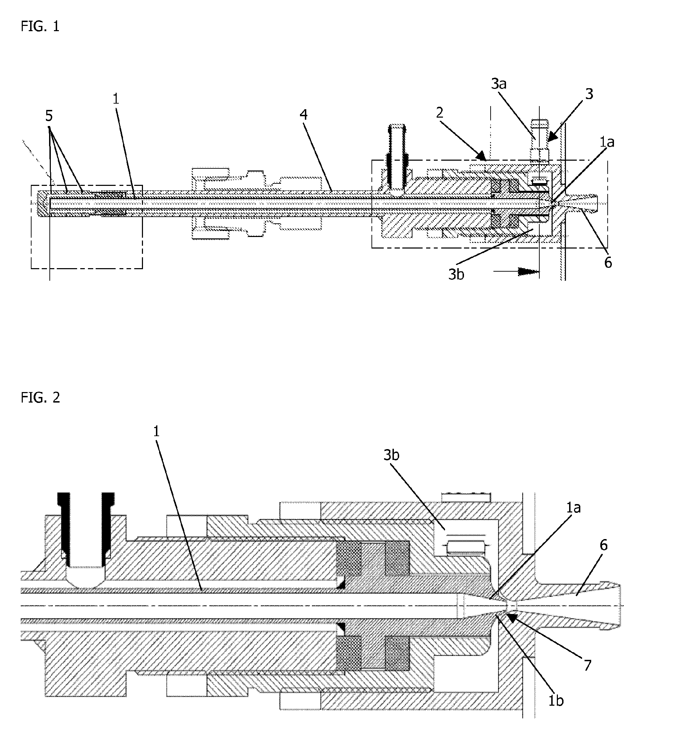

Dabei zeigt die Fig. 1 einen Längsschnitt durch eine erfindungsgemäße Vorrichtung, und Fig. 2 ist eine Darstellung des Mischungsabschnittes der Vorrichtung der Fig. 1 in vergrößertem Maßstab, ebenfalls im Längsschnitt.

Die in Fig. 1 dargestellte Vorrichtung weist ein Rohr 1 auf, welches in ein Volumen eingebracht werden kann, in welchem sich das zu analysierende Gas befindet. Dieses Volumen kann selbst eine Rohrleitung od. dgl. sein, beispielsweise der Abgasstrang eines Verbrennungsmotors. Dieses Rohr 1 zum Entnehmen einer Probe des zu analysierenden Gases führt, vorzugsweise in gerader Ausführung, zu einem Bereich 2, in welchem ein Verdünnungsgas zugemischt wird. Vorzugsweise weist das Endstück 1a des Probegasrohres 1 einen sich zur Mündung verjüngenden Innenquerschnitt auf.

Das Verdünnungsgas, typischerweise bei Fahrzeuganwendungen gefilterte Luft bzw. gereinigte Pressluft, wird über eine Zuführung 3 in den Bereich 2 zugeleitet. Die Zuführung 3 für das Verdünnungsgas weist einen senkrecht zum Probegasrohr 1 verlaufenden Abschnitt 3a auf, der in eine dieses Probegasrohr 1 im Bereich 2 ringförmig umgebende Kammer 3b mündet. Dabei verläuft der gerade Abschnitt 3a der Zuführung 3 vorzugsweise so, dass dessen Achse die Achse des Probegasrohres 1 nicht schneidet.

Vorteilhafterweise ist das Rohr 1 für das zu analysierende Gas von einem koaxialen Aussenrohr 4 umgeben, so dass zwischen dieses beiden Rohren 1, 4 ein Volumen definiert ist, in welchem ein Gas mit im wesentlichen der Temperatur des zu analysierenden Gases eingebracht sein kann. Damit ist in einfacher Weise das Probegasrohr 1 gegenüber der Umgebungs- und Verdünnungsluft thermisch isoliert. Vorzugsweise ist dieses Gas ein Teil des zu analysierenden Gases, und um das Volumen zwischen den Rohren 1, 4 damit zu füllen, weist das Aussenrohr 4 Öffnungen 5 als Ein- und Austrittspassagen für das zu analysierende Gas in den Raum zwischen Probegasrohr 1 und Aussenrohr 4 auf.

Der eigentliche Mischbereich von zu analysierendem Gas und Verdünnungsgas im Bereich 2 ist in Form einer Venturidüse gestaltet. Der Ausgang aus der Kammer 3b für das Verdünnungsgas, welcher in die gemeinsame Leitung 6 für die Mischung aus zu analysierendem Gas und Verdünnungsgas übergeht, ist als konkaver Abschnitt 7 mit in Strömungsrichtung des Verdünnungsgases zuerst geringer werdendem Querschnitt und dann wieder ansteigendem Querschnitt ausgeführt. Dabei mündet das Probegasrohr 1 kurz vor der Stelle mit geringstem Querschnitt in den als Venturidüse ausgebildeten Abschnitt des Mischbereiches 2 ein.

Vorteilhafterweise ist dabei das Endstück 1b des Probegasrohres 1 koaxial zur Venturidüse ausgerichtet und ist vorteilhafterweise auch noch geometrisch ähnlich der Venturidüse ausgebildet, wofür die Außenseite des Endstückes 1b konkav ausgebildet ist.

## Patentansprüche

1. Vorrichtung zur Verdünnung eines zu analysierenden Gases mit einem Verdünnungsgas, mit einem Probegasrohr (1) und einer Zuführung (3) für das Verdünnungsgas, die in eine gemeinsame Leitung (6) für das verdünnte, zu analysierende Gas münden, **dadurch gekennzeichnet, dass** die Zuführung (3) für das Verdünnungsgas in Form einer Venturidüse (7) in die gemeinsame Leitung (6) übergeht, dass das Probegasrohr (1) gegenüber der Umgebungs- und Verdünnungsluft thermisch isoliert ausgeführt ist und kurz vor der Stelle mit geringstem Querschnitt in die Venturidüse (7) einmündet.

2. Vorrichtung nach Anspruch 1, **dadurch gekennzeichnet, dass** das Probegasrohr (1) von einem koaxialen Aussenrohr (4) umgeben ist, und im Raum zwischen Probegas-(1) und Aussenrohr (4) ein Gas mit im wesentlichen der Temperatur des zu analysierenden Gases vorhanden ist.

3. Vorrichtung nach Anspruch 2, **dadurch gekennzeichnet, dass** Ein- und Austrittspassagen (5) für das zu analysierende Gas in den Raum zwischen Probegas- (1) und Aussenrohr (4) vorhanden sind.

4. Vorrichtung nach einem der Ansprüche 1 bis 3, **dadurch gekennzeichnet, dass** das Endstück (1b) des Probegasrohres (1) koaxial zur Venturidüse (7) ausgerichtet ist.

5. Vorrichtung nach Anspruch 4, **dadurch gekennzeichnet, dass** das Endstück (1b) des Probegasrohres (1) geometrisch ähnlich der Venturidüse (7) ausgebildet ist.

6. Vorrichtung nach einem der Ansprüche 1 bis 5, **dadurch gekennzeichnet, dass** die Zuführung (3) für das Verdünnungsgas einen senkrecht zum Probegasrohr (1) verlaufenden Abschnitt (3a) umfasst, der in eine dieses Probegasrohr (1) ringförmig umgebende Kammer (3b) mündet, deren Ausgang in Form einer Venturidüse (7) in die gemeinsame Leitung (6) übergeht.

7. Vorrichtung nach Anspruch 6, **dadurch gekennzeichnet, dass** die Achse des senkrecht zum Probegasrohr (1) verlaufenden Abschnitts (3a) die Achse des Probegasrohres (1) nicht schneidet.

8. Vorrichtung nach einem der Ansprüche 1 bis 7, **dadurch gekennzeichnet, dass** das Endstück (1b) des Probegasrohres (1) einen sich zur Mündung verjüngenden Innenquerschnitt (1a) aufweist.
